# EUROPÄISCHE PATENTSCHRIFT

(11) **EP 4 015 474 B1**
(45) Veröffentlichungstag und Bekanntmachung des Hinweises auf die Patenterteilung: **14.06.2023**
(21) Anmeldenummer: 20214481.2
(22) Anmeldetag: 16.12.2020
(51) Int. Cl.: C03B 37/012, C03B 37/027

(54) **VERFAHREN ZUR HERSTELLUNG EINER VORFORM EINER ANTIRESONANTEN HOHLKERNFASER**
METHOD OF MANUFACTURING A PREFORM OF AN ANTIRESONANT HOLLOW CORE FIBRE
PROCÉDÉ DE FABRICATION D'UNE PRÉFORME D'UNE FIBRE À COEUR CREUX ANTIRÉSONANTE

(43) Veröffentlichungstag der Anmeldung: 22.06.2022
(73) Patentinhaber: Heraeus Quarzglas GmbH & Co. KG, 63450 Hanau (DE)
(72) Erfinder: ROSENBERGER, Manuel, 63450 Hanau (DE); TANSEL, Yusuf, 63450 Hanau (DE); EHRENTRAUT, Enrico, 63450 Hanau (DE); REIS, Benjamin, 63450 Hanau (DE)
(74) Vertreter: Heraeus IP

(56) Entgegenhaltungen:
- GREGORY T. JASION ET AL: "Fabrication of tubular anti-resonant hollow core fibers: modelling, draw dynamics and process optimization", OPTICS EXPRESS, Bd. 27, Nr. 15, 10. Juli 2019 (2019-07-10) , Seite 20567, XP055655469, DOI: 10.1364/OE.27.020567
- ALEXANDER HARTUNG ET AL: "Low-loss single-mode guidance in large-core antiresonant hollow-core fibers", OPTICS LETTERS, Bd. 40, Nr. 14, 15. Juli 2015 (2015-07-15) , Seite 3432, XP055221852, US ISSN: 0146-9592, DOI: 10.1364/OL.40.003432

## Beschreibung

Die Erfindung betrifft ein Verfahren zur Herstellung einer Vorform einer antiresonanten Hohlkernfaser.

### Hintergrund der Erfindung

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Diese Nachteile vermeiden oder verringern "Hohlkernfasern", bei denen der Kern einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. In Abhängigkeit vom physikalischen Mechanismus der Lichtleitung werden Hohlkernfasern unterteilt in "photonische Bandlückenfasern" und "antiresonante Hohlkernfasern".

Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "antiresonante Hohlkernfaser" ("antiresonant hollow-core fibers"; ARHCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Potenzielle Anwendungen der Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

### Stand der Technik

Ein Nachteil antiresonanter Hohlkernfasern liegt darin, dass Moden höherer Ordnung nicht zwangsläufig unterdrückt werden, so dass sie über große Übertragungslängen häufig nicht rein einmodig sind und sich die Qualität des Ausgangsstrahls verschlechtert.

Im Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Strukturelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die effektive Modenunterdrückung hängt von der Mittenwellenlänge des übertragenen Lichts und von Strukturparametern des Faserdesigns ab, wie dem Radius des Hohlkerns und der Durchmesserdifferenz von verschachtelten Ringstrukturen in den Antiresonanzelementen.

Aus der EP 3 136 143 A1 ist eine antiresonante Hohlkernfaser bekannt (dort bezeichnet als "Hohlkernfaser ohne Bandlücke"), bei der der Kern neben der Fundamentalmode noch weitere Moden leiten kann. Zu diesem Zweck ist er von einem inneren Mantel mit "nicht-resonanten Elementen" umgeben, die eine Phasenanpassung von antiresonanten Moden mit den höheren Moden liefern. Die Herstellung der Hohlkernfaser erfolgt nach einer sogenannten "stack-anddraw-Technik", indem die Ausgangselemente zu einem achsenparallelen Ensemble angeordnet und zu einer Vorform fixiert werden, welche anschließend elongiert wird. Hierbei wird ein Hüllrohr mit hexagonalem Innenquerschnitt verwendet und in den Innenkanten des Hüllrohres werden sechs sogenannte "ARE-Vorformen" (Anti-Resonanz-Element-Vorformen) fixiert. Diese Vorform wird in zwei Stufen zu einer Hohlkernfaser ausgezogen.

Die exakte und reproduzierbare Herstellung einer Vorform gestaltet sich als schwierig, da bereits geringe Maßabweichungen die Effektivität der Lichtleitung negativ beeinträchtigen. Insbesondere mit zunehmender Wandstärke des Hüllrohrs, und einem damit einhergehenden Bedarf an zugeführter Wärme, kommt es bei der Verbindung von Hüllrohr und Antiresonanzelement-Vorformlingen zu unkontrollierten Verformungen. Daher kann es vorteilhaft sein, ein vergleichsweises dünnwandiges Hüllrohr zur Verbindung mit den Antiresonanzelement-Vorformlingen zu verwenden und dieses in einem separaten Verfahrensschritt mittels einem Überfangrohr aus massivem Glas zu umfangen, um die gewünschte Wandstärke einzustellen.

Dabei kann das Verbinden von Überfangrohr mit Hüllrohr (das sogenannte "Aufkollabieren") und das Ausziehen zur finalen Glasfaser und einem konzertieren Schritt oder in zwei voneinander getrennten Schritten vollzogen werden. Auch wenn nicht direkt zur finalen Glasfaser ausgezogen wird, ist es möglich, das Aufkollabieren mit einem teilweisen Elongieren zu kombinieren, um die Vorform in ihrem Durchmesser zu reduzieren und somit für das finale Ausziehen vorzubereiten.

Aus der US 2010/030429 A1 ist ein Verfahren zur Herstellung einer mikrostrukturierten optischen Faser bekannt, bei welchem eine Vorform, bestehend aus einem Kern umfassend eine Vielzahl von Mikroröhren und einem den Kern umhüllenden Überfangrohr aus massivem Glas, zu einer optischen Faser ausgezogen wird. Um Kern und Überfangrohr beim Ausziehen zu verbinden, liegt zwischen Überfangrohr und Kern ein Unterdruck an, während innerhalb des Kerns ein Überdruck anliegt, damit die Mikroröhren beim Ausziehen zur finalen Faser nicht kollabieren.

Aus der US 2020/0024178 A1 ist ein Verfahren zu Herstellung einer Hohlkernfaser bekannt, bei welchem eine Vorform, bestehend aus einem hohlen Kern und einem den Kern umhüllenden Überfangrohr aus massivem Glas, zu einer Hohlkernfaser ausgezogen wird. Um Kern und Überfangrohr beim Ausziehen zu verbinden, liegt zwischen Überfangrohr und Kern ein Unterdruck an, während in den hohlen Kern ein Gas eingeleitet wird, um ein Kollabieren des Kerns zu verhindern. Im Paper von Gregory T. Jasion et al., "Fabrication of tubular anti-resonant hollow core fibers: modelling, draw dynamics and process optimization", Optics Express Vol. 27, N°15 (2019), p.20567 wird ein Verfahren zur Herstellung einer antiresonanten Hohlkernfaser offenbart.

### Technische Aufgabenstellung

Antiresonante Hohlkernfasern, und insbesondere solche mit verschachtelten Strukturelementen, haben komplexe Innengeometrien, was ihre exakte und reproduzierbare Herstellung erschwert. Dies gilt umso mehr, da zur Einhaltung der Resonanz- beziehungsweise Antiresonanzbedingungen bereits geringe Maßabweichungen in der Größenordnung der Arbeitswellenlänge des zu führenden Lichts nicht tolerierbar sind. Abweichungen von der Soll-Geometrie können ihre Ursache bei der Konfiguration der Faser-Vorform haben, und sie können auch durch unkontrollierte, nicht-maßstäbliche Verformungen, beim Aufkollabieren auftreten.

Jede strukturelle Abweichung von der Soll-Geometrie beim Aufkollabieren eines Überfangrohrs auf ein mit Antiresonanzelement-Vorformlingen versehenes Hüllrohr verringert die Qualität der finalen antiresonanten Hohlkernfaser.

Ziel der Erfindung ist ein Verfahren zur kostengünstigen Herstellung einer antiresonanten Hohlkernfaser anzugeben, dass Beschränkungen herkömmlicher Herstellverfahren vermeidet. Ein weiteres Ziel der Erfindung ist ein Verfahren zur Verfügung zu stellen, dass die großvolumige Herstellung von antiresonanten Hohlkernfasern ermöglicht.

Insbesondere ist es Ziel der Erfindung, ein Verfahren zur Herstellung einer Vorform für antiresonante Hohlkernfasern bereitzustellen, mit dem reproduzierbar eine hohe Präzision der Strukturelemente beim Aufkollabieren eines Überfangrohrs auf ein Hüllrohr möglichst erreicht wird.

### Bevorzugte Ausführungsformen der Erfindung

Ein Beitrag zur mindestens teilweisen Erfüllung mindestens einer der zuvor genannten Aufgaben wird durch die Merkmale der unabhängigen Ansprüche geleistet. Die abhängigen Ansprüche stellen bevorzugte Ausführungsformen bereit, die zur mindestens teilweisen Erfüllung mindestens einer der Aufgaben beitragen.

### Allgemeines

In der vorliegenden Beschreibung beinhalten Bereichsangaben auch die als Grenzen genannten Werte. Eine Angabe der Art "im Bereich von X bis Y" in Bezug auf eine Größe A bedeutet folglich, dass A die Werte X, Y und Werte zwischen X und Y annehmen kann. Einseitig begrenzte Bereiche der Art "bis zu Y" für eine Größe A bedeuten entsprechend als Wert Y und kleiner als Y.

Einige der beschriebenen Merkmale sind mit dem Begriff "im Wesentlichen" verknüpft. Der Begriff "im Wesentlichen" ist so zu verstehen, dass unter realen Bedingungen und Fertigungstechniken eine mathematisch exakte Auslegung von Begrifflichkeiten wie "Überlagerung", "senkrecht", "urchmesser" oder "Parallelität" nie exakt, sondern nur innerhalb gewisser fertigungstechnischer Fehlertoleranzen gegeben sein kann. Beispielsweise schließen "im Wesentlichen senkrechte Achsen" einen Winkel von 85 Grad bis 95 Grad zueinander ein und "im Wesentlichen gleiche Volumen" umfassen eine Abweichung von bis zu 5 Volumen-%. Eine "im Wesentlichen aus Quarzglas bestehende Vorrichtung" umfasst beispielsweise einen Quarzglasanteil von ≥95 bis ≤100 Gewichts-%. Eine "im Wesentlichen vollständige Befüllung eines Volumens B" umfasst beispielsweise eine Befüllung von ≥95 bis ≤100 Volumen-% des Gesamtvolumens von B.

### Ausführliche Beschreibung

Die Erfindung betrifft Verfahren zur Herstellung einer Vorform einer antiresonanten Hohlkernfaser. Im Rahmen eines Verfahrensschrittes (a) erfolgt ein Bereitstellen eines Hüllrohrs mit einer Hüllrohrinnenseite und einer Hüllrohraußenfläche, wobei an der Hüllrohrinnenfläche mindestens ein Antiresonanzelement-Vorformling angeordnet ist.

Ein Verfahrensschritt (b) umfasst ein Bereitstellen eines Überfangrohrs mit einer Überfangrohrinnenfläche, wobei das Überfangrohr einen Innendurchmesser aufweist, welcher größer einem Außendurchmesser des Hüllrohrs ist.

Ein Verfahrensschritt (c) umfasst ein Anordnen des Hüllrohr innerhalb des Überfangrohr, so dass die Überfangrohrinnenfläche die Hüllrohraußenfläche, insbesondere im Wesentlichen konzentrisch, umgibt.

Ein Verfahrensschritt (d) umfasst ein Aufkollabieren des Überfangrohr auf das Hüllrohr, so dass sich die Überfangrohrinnenfläche mit der Hüllrohraußenfläche, insbesondere stoffschlüssig verbindet.

Die Lösung der Aufgaben wird dadurch erzielt, dass zumindest während des Aufkollabierens des Überfangrohrs auf das Hüllrohr in Verfahrensschritt (d) ein erster Unterdruck P1 zwischen Überfangrohrinnenfläche und Hüllrohraußenfläche und ein zweiter Unterdruck P2 innerhalb des Hüllrohrs, und optional auch innerhalb der Antiresonanzelement-Vorformlinge, angelegt wird, um das Aufkollabieren bei gleichzeitig reproduzierbar hohem Erhalt der Präzision der Strukturelemente, insbesondere des Hüllrohrs und der Antiresonanzelement-Vorformlinge, zu ermöglichen.

Die Vorform ist dasjenige Bauteil, aus dem die antiresonante Hohlkernfaser gezogen werden kann. Alternativ kann die Vorform zu einer sekundären Vorform weiterverarbeitet werden, aus der die antiresonante Hohlkernfaser gezogen wird. Die Weiterverarbeitung kann eine einmalige oder wiederholte Durchführung von Heißformprozessen wie z.B. Elongieren, Kollabieren oder Aufkollabieren von zusätzlichem Mantelmaterial umfassen.

Ein Hüllrohr ist ein im Wesentlichen aus Quarzglas gefertigtes rohrförmiges Element zur Anordnung der Antiresonanzelement-Vorformlinge an einer Hüllrohrinnenfläche. Beim Ausziehen der finalen Vorform umgibt das Hüllrohr den Hohlkern der antiresonanten Hohlkernfaser. In einer Ausgestaltungsform weist das Hüllrohr einen Innendurchmesser im Bereich von 10 bis 60 mm auf. In einer Ausgestaltungsform weist das Hüllrohr einen Außendurchmesser im Bereich von 25 bis 250 mm, vorzugsweise von 30 bis 200 mm auf. In einer Ausgestaltungsform weist das Hüllrohr eine Länge im Bereich von 400 bis 1200 mm auf.

Die Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem Quarzglas (SiO2), einem Kunststoff, insbesondere aus einem Polymer, aus einem Verbundwerkstoff oder aus kristallinem Material.

Als Antiresonanzelement-Vorformlinge werden rohrartige Bauteile oder Bestandteile der Vorform bezeichnet, die im Wesentlichen durch einfaches Langziehen beim Faserziehprozess zu Antiresonanzelementen in der Hohlkernfaser werden. In einer Ausgestaltungsform weisen die Antiresonanz-Vorformlinge zumindest teilweise eine Wandstärke im Bereich von 0,1 bis 3 mm, vorzugsweise im Bereich von 0,1 bis 2 mm, weiter bevorzugt im Bereich von 0,2 bis 1,5 mm auf. Die Antiresonanzelement-Vorformlinge können einfache oder verschachtelte Bauteile sein, an denen zusätzlich Positionierhilfen fixiert sein können. Die Antiresonanzelement-Vorformlinge haben mindestens zwei Wandungen, die aus Richtung des Hohlkerns gesehen eine negative Krümmung haben (konvex) oder keine Krümmung haben (plan, gerade). Durch Weiterverarbeitung der Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen.

Ein Überfangrohr ist ein im Wesentlichen aus Quarzglas gefertigtes rohrförmiges Element, welches im Zuge des erfindungsgemäßen Verfahrens um das Hüllrohr angeordnet wird und mittels Wärmeeintrag, beispielsweise über einen Flammenprozess, wie etwa einen Wasserstoff-Brenner, oder einem flammenfreien Prozess, wie beispielsweise mittels eines Elektroofens, unter Zuhilfenahme eines ersten Unterdrucks P1, mit diesem, insbesondere stoffschlüssig, verbunden wird (das sogenannte "Aufkollabieren"). Das Überfangrohr sorgt bei der Verwendung eines vergleichsweise dünnen Hüllrohr für zusätzliches Mantelmaterial bei der Ausbildung der finalen antiresonanten Hohlkernfaser und ermöglicht damit die Verwendung eines vergleichsweise dünnen Hüllrohrs zur Anordnung der Antiresonanzelement-Vorformlinge.

Die im Wesentlichen aus Quarzglas gefertigten Bauelemente der Vorform können eine Dotierung aufweisen. Eine Dotierung ermöglich die Anpassung der thermischen Ausdehnungskoeffizienten von benachbarten Vorform-Bauteilen, um Spannungen zu vermeiden oder zu vermindern. Als die Viskosität von Quarzglas absenkende Dotierstoffe kommen vorzugsweise Fluor, Chlor und/oder Hydroxylgruppen zum Einsatz. Die Dotierung kann auch dazu eingesetzt werden, die thermische Stabilität eines Bestandteils zu Gunsten der Stabilität eines benachbarten Bestandteils zu verringern. So hat es sich beispielsweise beim Aufkollabieren als günstig erwiesen, wenn das Quarzglas des Hüllrohres bei einer Messtemperatur von 1250 °C eine um mindestens 0,5 dPa.s höhere Viskosität, vorzugsweise eine um mindestens 0,6 dPa.s, höhere Viskosität, aufweist als das Quarzglas von zusätzlich aufgebrachtem Mantelmaterial (bei Angabe der Viskosität als logarithmischer Wert in dPa.s).

In Verfahrensschritt (c) wird das Hüllrohr innerhalb des Überfangrohr angeordnet, so dass die Hüllrohraußenfläche der Überfangrohrinnenfläche zugewandt ist. Dafür weist das Überfangrohr einen Innendurchmesser auf, welcher größer ist als der Außendurchmesser des Hüllrohrs. In einer Ausgestaltungsform ist der Innendurchmesser des Überfangrohrs 1 bis 15 mm größer als der Außendurchmesser des Hüllrohrs. Dies erlaubt eine einfach durchzuführende Anordnung des Hüllrohrs innerhalb des Überfangrohrs und gleichzeitig ist ein stoffschlüssiges Verbindung von Überfangrohrinnenfläche mit Hüllrohraußenfläche durch thermischen Wärmeeintrag in Verfahrensschritt (d) beim Aufkollabieren möglich. Unterschieden sich die Durchmesser um mehr als 15 mm, wäre ein stoffschlüssige Verbindung von Überfangrohr und Hüllrohr nur unter unkontrollierten plastischen Verformungen der Vorform möglich, welche die Lichtleitfähigkeit der finalen antiresonanten Hohlkernfaser negativ beeinflussen würden.

Ziel des Aufkollabierens in Verfahrensschritt (d) ist eine stoffschlüssige Verbindung zwischen Überfangrohrinnenfläche und Hüllrohraußenfläche durch Wärmeeintrag. Der Wärmeeintrag muss derart erfolgen, dass eine stoffschlüssige Verbindung zwischen den Materialien der beiden Elemente möglich ist. Dies kann erreicht werden, indem die Überfangrohrinnenfläche und die Hüllrohraußenfläche zumindest partiell aus dem festen Aggregatzustand in den flüssigen, insbesondere zähflüssigen, Aggregatzustand wechseln.

Der Wärmeeintrag kann auf unterschiedliche Weise realisiert werden, beispielsweise durch:
- Flammenbasierte Prozesse: basieren auf der Oxidation eines exotherm reagierenden Gases. Ein Beispiel ist die Nutzung von Wasserstoff - auch als "H2" bezeichnet - als Brenngas (die Flammenhydrolyse). Es reagiert mit dem Sauerstoff - auch als "O2" bezeichnet - in der Luft; oder
- Flammenfreie Prozesse: nutzen andere sich erwärmende Systeme, die keiner offenen Flamme benötigen. Ein Beispiel ist die Nutzung eines Widerstands, der elektrische Energie in thermische Energie (Wärme) umzuwandeln vermag.

Um das Aufkollabieren zu ermöglichen, ist zumindest im Zuge des Verfahrensschritt (d) der erste Unterdruck P1 zwischen der Überfangrohrinnenfläche und der Hüllrohraußenfläche angelegt. Der erste Unterdruck P1 trägt zur besseren Reproduzierbarkeit bei, indem er zusätzliche, nach Innen wirkende Kräfte beim Aufkollabieren erzeugt, so dass zufällige Schwankungen anderer Verfahrensparameter, welche zu einem unkontrollierten Aufkollabierprozess führen können, kompensiert werden. Auch ein Spalt, resultierend aus einem Unterschied zwischen Innendurchmesser des Überfangrohrs und Außendurchmesser des Hüllrohrs, lässt sich so in reproduzierbarer Weise ohne Schlierenbildung und/oder Lufteinschlüsse innerhalb der Vorform schließen.

Durch den beim Aufkollabieren in Verfahrensschritt (d) benötigten Wärmeeintrag kommt es nicht nur zu einer zumindest partiellen Erweichung der Überfangrohrinnenfläche und der Hüllrohraußenfläche, sondern auch die Antiresonanzelement-Vorformlinge wechseln zumindest partiell aus dem festen Aggregatzustand in den flüssigen, insbesondere zähflüssigen, Aggregatzustand. Durch die Erweichung besteht darüber hinaus die Gefahr einer unkontrollierten und ungewollten strukturellen Verformung der einzelnen Bauelemente, was die Qualität der finalen antiresonanten Hohlkernfaser negativ beeinflusst. Aufgrund der im Vergleich zum Überfangrohr geringeren strukturellen Dimensionen, und einer damit einhergehenden geringeren thermischen Masse, kann es insbesondere zu unkontrollierten strukturellen Verformungen des Hüllrohrs und des zumindest einen Antiresonanzelement-Vorformlings kommen.

Bei der Herstellung einer Vorform einer antiresonanten Hohlkernfaser hat sich herausgestellt, dass ein Unterdruck zwischen Überfangrohrinnenfläche und Hüllrohraußenfläche zumindest partiell zu einem unkontrollierten Ausdehnen des Hüllrohrs führt. Um dieses zu verhindern und somit eine präzise und reproduzierbare Ausformung einer Vorform einer antiresonanten Hohlkernfaser sicherzustellen, offenbart die Erfindung zumindest während des Aufkollabierens in Verfahrensschritt (d) ein Anlegen eines ersten Unterdrucks P1 zwischen Überfangrohrinnenfläche und Hüllrohraußenfläche und eines zweiten Unterdrucks P2 innerhalb des Hüllrohrs.

Dieses Konzept erlaubt ein reproduzierbares und präzises Herstellungsverfahren für Vorformen einer antiresonanten Hohlkernfaser im industriellen Maßstab.

Als Unterdruck wird erfindungsgemäß ein relativer Druck verstanden, welcher unterhalb dem die Vorform umgebenden Umgebungsdruck liegt. Ein Unterdruck von beispielsweise -50 mbar entspricht einer negativen Druckdifferenz von 50 mbar gegenüber dem Umgebungsdruck, was beispielsweise bei einem Umgebungsdruck von 1000 mbar einem Druck von 950 mbar entspräche. Ein maximal möglicher Unterdruck wird beim Anlegen eines vollständigen Vakuums erreicht und entspräche dem umgebenden Umgebungsdruck.

Der erste Unterdruck P1 und der zweite Unterdruck P2 können beim Aufkollabieren in Verfahrensschritt (d) unterschiedliche Werte gegenüber dem Umgebungsdruck annehmen.

Eine Ausgestaltungsform des Verfahrens ist dadurch gekennzeichnet, dass der erste Unterdruck P1 in einem Bereich von -150 mbar bis -5 mbar, bevorzugt in einem Bereich von -120 mbar bis -5 mbar, weiter bevorzugt in einem Bereich von -100 mbar bis -10 mbar und der zweite Unterdruck P2 in einem Bereich von -100 mbar bis -1 mbar, bevorzugt in einem Bereich von -70 mbar bis -1 mbar, weiter bevorzugt in einem Bereich von -50 mbar bis -1 mbar gegenüber einem Umgebungsdruck liegt. Auf diese Weise verläuft das Aufkollabieren in Verfahrensschritt (d) reproduzierbar und präzise unter lediglich geringen und kontrollierbaren Verformungen der Bauteile der Vorform, insbesondere des Hüllrohrs und der Antiresonanzelement-Vorformlinge, ab. Weist der erste Unterdruck P1 einen höheren Betrag als 150 auf, kommt es zu ungewollten Verformungen der Bauteile der Vorform, insbesondere des Hüllrohrs und des zumindest einen Antiresonanzelement-Vorformlings. Bei einem geringeren Betrag des ersten Unterdrucks P1 als 5 erfolgt hingegen keine reproduzierbar präzise stoffschlüssige Verbindung von Überfangrohr und Hüllrohr. Weist der zweite Unterdruck P2 einen höheren Betrag als 100 auf, kommt es zu einem partiellen unkontrollierten Kollabieren des Hüllrohrs, was negative Auswirkungen auf die Qualität der finalen antiresonanten Hohlkernfaser nach sich zieht. Weist der zweite Unterdruck P2 hingegen einen Betrag kleiner als 1 auf, oder liegt sogar ein Überdruck an, kommt es zu unkontrollierten Verformungen, insbesondere zu einem Aufblähen, des Hüllrohrs und der Antiresonanzelement-Vorformlinge, was ebenso negative Auswirkungen auf die Qualität der finalen antiresonanten Hohlkernfaser nach sich zieht.

Eine Ausgestaltungsform des Verfahrens ist dadurch gekennzeichnet, dass der erste Unterdruck P1 einen größeren Betrag als der zweite Unterdruck P2 aufweist. Es liegt also zwischen Überfangrohrinnenfläche und Hüllrohraußenfläche ein geringerer Druck an als innerhalb des Hüllrohrs. Dies erlaubt eine stoffschlüssige Verbindung von Überfangrohrinnenfläche und Hüllohraußenfläche, ohne unkontrollierte Verformung, insbesondere Ausdehnung, des Hüllrohrs und/oder der Antiresonanz-Vorformlinge.

Es hat sich als vorteilhaft herausgestellt, dass zwischen dem ersten Unterdruck P1 und dem zweiten Unterdruck P2 ein Druckunterschied in einem Bereich von 3 bis 60 mbar, bevorzugt zwischen 5 und 40 mbar, weiter bevorzugt zwischen 10 und 35 mbar vorliegt.

Das Verfahren kann derart ausgestaltet sein, dass der zweite Unterdruck P2 im gesamten Hüllrohr, also auch innerhalb der Antiresonanzelement-Vorformlinge, zumindest während des Aufkollabierens in Verfahrensschritt (d) angelegt wird.

Eine Ausgestaltungsform des Verfahrens ist dadurch gekennzeichnet, dass zumindest während des Aufkollabierens in Verfahrensschritt (d) innerhalb des mindestens einen Antiresonanzelement-Vorformlings ein dritter Unterdruck P3 angelegt wird. Dies erlaubt eine noch feinere Ausjustierung der unterschiedlichen Druckverhältnisse und damit ein noch präziseres Herstellverfahren in Abhängigkeit der gewählten Materialien und/oder Wandstärken der einzelnen Bauteile der Vorform.

Dabei können der zweite Unterdruck P2 und der dritte Unterdruck P3, verschiedene Beträge, als auch den gleichen Betrag aufweisen.

Eine Ausgestaltungsform des Verfahrens ist dadurch gekennzeichnet, dass der dritte Unterdruck P3 einen anderen Betrag als der erste Unterdruck P1 und der zweite Unterdruck P2 aufweist, insbesondere dass der dritte Unterdruck P3 einen kleineren Betrag als der zweite Unterdruck P2, und bevorzugt auch einen kleineren Betrag als der erste Unterdruck P1, aufweist. In einer Ausgestaltungsform liegt der dritte Unterdruck P3 in einem Bereich von -100 mbar bis -1 mbar, bevorzugt in einem Bereich von -70 mbar bis -1 mbar, weiter bevorzugt in einem Bereich von -50 mbar bis -1 mbar, noch weiter bevorzugt in einem Bereich von - 10mbar bis -1 mbar gegenüber einem Umgebungsdruck. Weist der dritte Unterdruck P3 einen kleineren Betrag als der zweite Unterdruck P2 auf, wirkt also innerhalb der Antiresonanzelement-Vorformlinge ein höherer Druck als im umgebenden Hüllrohr, verringert sich die Gefahr einer Zerstörung der Antiresonanzelement-Vorformlinge durch Kollabieren. Stattdessen kann es zu einem leichten Aufblähen der Antiresonanzelement-Vorformlinge kommen, was im Gegensatz zu einem Kollabieren weniger negative Auswirkungen auf die Qualität der finalen antiresonanten Hohlkernfaser nach sich zieht.

Die verschiedenen Unterdrücke P1, P2 und optional P3 können auf unterschiedliche Weise zur Herstellung der Vorform angelegt werden. Eine Ausgestaltungsform des Verfahrens ist derart gestaltet, dass zumindest der erste Unterdruck P1 und der zweite Unterdruck P2 an einem gleichen Ende der herzustellenden Vorform angelegt werden.

Um ein Anlegen der verschiedenen Unterdrücke P1, P2 und optional P3 zum Herstellen der Vorform zu ermöglichen, können die Bauteile der Vorform unterschiedlich zueinander angeordnet und/oder miteinander verbunden werden.

Eine Ausgestaltungsform des Verfahrens ist dadurch gekennzeichnet, dass vor Verfahrensschritt (d) das Hüllrohr an einem ersten Hüllrohrende gasundurchlässig verschlossen und die Überfangrohrinnenfläche an einem dem ersten Hüllrohrende axial entgegengesetztem zweiten Hüllrohrende bereichsweise mit der Hüllrohraußenfläche gasundurchlässig verbunden wird. Das gasundurchlässige Verschließen des ersten Hüllrohrendes kann beispielsweise durch thermisches Zusammenschmelzen unter Ausbildung einer Spitze, insbesondere einer Spitze aus Quarzglas, oder mittels einen auf das erste Hüllrohrende aufgesetzten gasdichten Verschluss erreicht werden. In einer bevorzugten Ausgestaltung des Verfahrens ist das erste Hüllrohrende, insbesondere die Spitze von der Erdoberfläche aus betrachtet unten an der herzustellenden Vorform angeordnet.

Das gasundurchlässige Verbinden von Überfangrohrinnenfläche und Hüllrohraußenfläche im Bereich des zweiten Hüllrohrendes kann beispielsweise über einen lokalen Wärmeeintrag, welcher eine radial umlaufend stoffschlüssige Verbindung von Überfangrohrinnenfläche und Hüllrohraußenfläche, beispielsweise über eine axiale Ausdehnung von 20 bis 60 mm, erreicht werden. Es kann vorteilhaft sein, zur Ausbildung der gasundurchlässigen Verbindung einen Unterdruck zwischen Überfangrohrinnenfläche und Hüllrohraußenfläche anzulegen.

Das Anlegen der jeweiligen Unterdrücke kann am gleichen räumlichen Ende der herzustellenden Vorform stattfinden.

Eine Ausgestaltungsform des Verfahrens ist dadurch gekennzeichnet, dass der erste Unterdruck P1 im Bereich des ersten Hüllrohrendes und der zweite Unterdruck P2 im Bereich des zweiten Hüllrohrendes angelegt wird. Dies ermöglicht eine vereinfachte Verfahrensführung aus sterischen Gründen.

Die Anordnung des Hüllrohrs innerhalb des Überfangrohrs kann auf unterschiedliche Weise realisiert werden.

Eine Ausgestaltungsform des Verfahrens ist dadurch gekennzeichnet, dass das Hüllrohr am zweiten Ende eine Haltekugel aufweist, um in Verfahrensschritt (c) das Hüllrohr innerhalb des Überfangrohrs anzuordnen. Unter einer Haltekugel ist ein, insbesondere kugelartig ausgestalteter, Abschnitt oder Aufsatz des Hüllrohrs mit einem im Vergleich zum restlichen Hüllrohrs vergrößertem Durchmesser, insbesondere Außendurchmesser, zu verstehen, welcher größer einem Durchmesser, insbesondere Innendurchmesser, des Überfangrohrs ausgestaltet ist. Dies erlaubt ein Einschieben des Hüllrohrs mit dem ersten Ende voran in das Überfangrohr bis zum Erreichen der Haltekugel, welche aufgrund des größeren Durchmessers nicht in das Überfangrohr eingebracht werden kann. Da im Zuge des Verfahrens die einzelnen Bauteile der Vorform senkrecht zur Erdoberfläche, und dabei insbesondere das zweite Ende des Hüllrohrs von der Erdoberfläche gesehen senkrecht oberhalb des ersten Endes des Hüllrohrs angeordnet ist, erlaubt die Haltekugel ein unkompliziertes und sicheres Einhängen des Hüllrohrs in das Überfangrohr. In einer Ausgestaltungsform wird das Hüllrohr am zweiten Ende, insbesondere mittels Wärmeeintrag und Druckluft, unter Ausbildung der Haltekugel verformt. In einer weiteren, bevorzugten Ausgestaltungsform wird die Haltekugel als separates Bauteil vor dem Anordnen des Hüllrohrs innerhalb des Überfangrohrs mit dem zweiten Ende des Hüllrohrs, beispielsweise stoffschlüssig, verbunden. Dabei ist es bevorzugt, dass die Haltekugel, ebenso wie das Hüllrohr, aus Quarzglas mit identischer oder ähnlicher Zusammensetzung ausgeformt ist, um beim Wärmeeintrag beim Aufkollabieren keine thermisch bedingten Spannungen zu erzeugen. Das Hüllrohrinnere ist über eine fluidleitende Öffnung in der Haltekugel gasleitend mit der Umgebung des Hüllrohrs verbunden. Um einen Gasaustausch um die Haltekugel herum zu ermöglichen, kann die Haltekugel Rillen, Nuten oder andersartige axial verlaufende Vertiefungen aufweisen.

Das Anlegen der jeweiligen Unterdrücke an die herzustellende Vorform kann auf unterschiedliche Weise realisiert werden.

Eine Ausgestaltungsform des Verfahrens ist dadurch gekennzeichnet, dass der erste Unterdruck P1 mittels einer ersten Haltepfeife, welche an einem dem ersten Hüllrohrende zugewandten ersten Überfangrohrende angebracht ist, und der zweite Unterdruck P2 mittels einer zweiten Haltepfeife, welche an einem dem zweiten Hüllrohrende zugewandten zweiten Überfangrohrende angebracht ist, angelegt wird.

Unter einer Haltepfeife ist ein, insbesondere aus Quarzglas oder Metall gefertigtes, haubenartig ausgeformtes Bauelement mit einer Haltepfeifenöffnung und einem die Haltepfeifenöffnung umgebenden Haltepfeifenrand zu verstehen. Der Haltepfeifenrand ist ausgestaltet, auf ein axiales Überfangrohrende aufgesetzt und mit diesem über den vollständigen Umfang des Haltepfeifenrandes gasundurchlässig, beispielsweise mittels Wärmeintrag, verbunden zu werden. Dies stellt eine mechanische Befestigung der Haltepfeife mit dem Überfangrohr her. Zudem verschließt die aufgesetzte Haltepfeife das Überfangrohrende, so dass zwischen Haltepfeifenrand und Überfangrohrende kein Gasaustausch mit der Umgebung der herzustellenden Vorform stattfinden kann.

Die erste Haltepfeife weist einen ersten Gasanschluss, welcher fluidleitend mit der ersten Haltepfeifenöffnung verbunden oder verbindbar ist, auf. Zumindest während des Aufkollabierens in Verfahrensschritt (d) ist die erste Haltepfeife, insbesondere der erste Haltepfeifenrand, mit dem ersten Überfangrohrende verbunden, so dass der erste Gasanschluss über die erste Haltepfeifenöffnung und dem ersten Überfangrohrrohrende mit dem Spalt zwischen der Überfangrohrinnenfläche und der Hüllrohraußenfläche fluidleitend verbunden oder verbindbar ist. Ist die Überfangrohrinnenfläche am zweiten Ende mit der Hüllrohraußenfläche gasundurchlässig verbunden, ist über den ersten Gasanschluss der erste Unterdruck P1 anlegbar. Über den ersten Gasanschluss kann auch ein Überdruck angelegt werden oder der erste Gasanschluss kann fluidleitend verschlossen werden.

Die zweite Haltepfeife weist einen zweiten Gasanschluss, welcher fluidleitend mit der zweiten Haltepfeifenöffnung verbunden oder verbindbar ist, auf. Zumindest während des Aufkollabierens in Verfahrensschritt (d) ist die zweite Haltepfeife, insbesondere der zweite Haltepfeifenrand, mit dem zweiten Überfangrohrende verbunden, so dass der zweite Gasanschluss über die zweite Haltepfeifenöffnung, und bei Vorhandensein einer Haltekugel auch über die Haltekugel, mit dem zweiten Hüllrohrende fluidleitend verbunden oder verbindbar ist. Ist das erste Hüllrohrende gasundurchlässig verschlossen, ist über den zweiten Gasanschluss der zweite Unterdruck P2 anlegbar. Über den zweiten Gasanschluss kann auch ein Überdruck angelegt werden oder der zweite Gasanschluss kann fluidleitend verschlossen werden.

Eine Ausführungsform des Verfahrens ist dadurch gekennzeichnet, dass das erste Hüllrohrende, insbesondere das zu der Spitze ausgeformte erste Hüllrohrende, in einer Lochscheibe angeordnet ist.

Die Lochscheibe weist zumindest ein axial verlaufendes Loch auf, das ausgestaltet ist, das erste Hüllrohrende, insbesondere das zu der Spitze ausgeformte erste Hüllrohrende, derart aufzunehmen, dass das Hüllrohr, insbesondere das erste Hüllrohrende, innerhalb des Überfangrohrs fixiert ist. In einer Ausgestaltungsform ist die Lochscheibe als Teil der ersten Haltepfeife, insbesondere als Teil des ersten Haltepfeifenrandes, ausgebildet. Um einen Gasaustausch zwischen erstem Gasanschluss und dem Spalt zwischen der Überfangrohrinnenfläche und der Hüllrohraußenfläche zu ermöglichen, weist die Lochscheibe zumindest eine axiale durch die Lochscheibe verlaufende Durchführung auf.

Die Lochscheibe kann aus unterschiedlichen Materialien ausgebildet sein, wobei Quarzglas bevorzugt sind, da dies thermische Spannungen vermeidet.

Bei der Durchführung des Verfahrens können die verschiedenen Unterdrücke gleichzeitig oder in unterschiedlicher Reihenfolge angelegt werden.

Eine Ausführungsform des Verfahrens ist dadurch gekennzeichnet, dass zuerst der erste Unterdruck P1 und dann der zweite Unterdruck P2 angelegt wird. Insbesondere zum bereichsweisen gasundurchlässigen Verbinden von Überfangrohrinnenfläche und Hüllrohraußenfläche am zweiten Hüllrohrende ist ein bereits angelegter erster Unterdruck P1 vorteilhaft.

Eine Ausgestaltungsform des Verfahrens ist dadurch gekennzeichnet, dass die Vorform während dem Aufkollabieren in Verfahrensschritt (d) elongiert wird.

Beim Elongieren wird die Vorform gelängt. Das Elongieren kann maßstäblich erfolgen, so dass sich beispielsweise die Form und Anordnung von Bauteilen oder Bestandteilen der Vorform im elongierten Endprodukt widerspiegeln. Beim Elongieren kann die Vorform aber auch nichtmaßstäblich gezogen und ihre Geometrie verändert werden.

Die Herstellung der Vorform kann mit dem Abschließen des Aufkollabierens in Verfahrensschritt (d), und dem optionalen Elongieren, abgeschlossen sein. In weiteren Ausgestaltungsformen wird aus der Vorform eine sekundäre Vorform durch Weiterverarbeitung hergestellt, wobei die Weiterverarbeitung eine einmalige oder wiederholte Durchführung von einem oder mehreren der folgenden Heißumformprozesse umfasst:
i. Elongieren,
ii. Kollabieren,
iii. Kollabieren und gleichzeitiges Elongieren,
iv. Aufkollabieren von zusätzlichem Mantelmaterial
v. Aufkollabieren von zusätzlichem Mantelmaterial und anschließendes Elongieren
vi. Aufkollabieren von zusätzlichem Mantelmaterial und gleichzeitiges Elongieren

Beim Kollabieren wird eine Innenbohrung verengt oder Spalte zwischen rohrförmigen Bauteilen werden geschlossen oder verengt. Das Kollabieren geht in der Regel mit einem Elongieren einher. Die so hergestellte sekundäre Vorform kann zum Ziehen einer Hohlkernfaser bereits ausgelegt und geeignet sein. Optional kann die sekundäre Vorform weiterverarbeitet werden, indem sie beispielsweise elongiert oder ihr zusätzliches Mantelmaterial hinzugefügt wird.

### Beispiele

Die Erfindung wird im Folgenden durch Beispiele weiter beispielhaft illustriert. Die Erfindung ist nicht auf die Beispiele beschränkt.

### Figuren

Die Erfindung wird im Folgenden durch Figuren weiter beispielhaft illustriert. Die Erfindung ist nicht auf die Figuren beschränkt.

Es zeigen
- Fig. 1: einen Längsschnitt durch ein erstes Zwischenprodukt eines Verfahrens zur Herstellung einer Vorform einer antiresonanten Hohlkernfaser,
- Fig. 2: einen Längsschnitt durch ein zweites Zwischenprodukt des Verfahrens zur Herstellung einer Vorform einer antiresonanten Hohlkernfaser,
- Fig. 3: einen Längsschnitt durch das zweite Zwischenprodukt des Verfahrens zur Herstellung einer Vorform einer antiresonanten Hohlkernfaser beim Anlegen eines ersten Unterdrucks P1 und eines zweiten Unterdrucks P2, und
- Fig. 4: ein Flussdiagramm eines Verfahrens zur Herstellung einer Vorform einer antiresonanten Hohlkernfaser.

### Beschreibung der Figuren

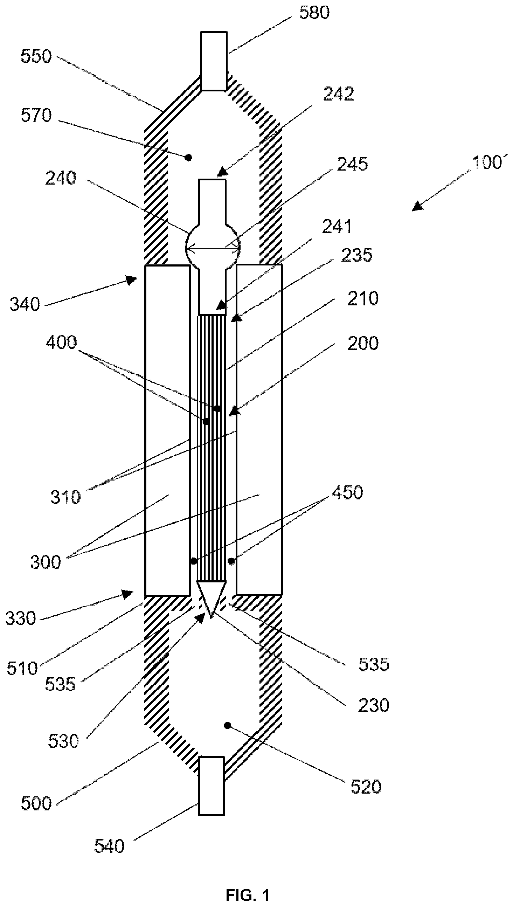

**Figur 1** zeigt einen Längsschnitt durch ein erstes Zwischenprodukt 100' eines Verfahrens zur Herstellung einer Vorform einer antiresonanten Hohlkernfaser umfassend ein Hüllrohr 200 und ein Überfangrohr 300. Das Hüllrohr 200 weist eine Hüllrohraußenfläche 210 und eine Hüllrohrinnenfläche auf, wobei an der Hüllrohrinnenfläche axial ausgerichtet mehrere Antiresonanzelement-Vorformlinge 400 angeordnet und mit dieser stoffschlüssig verbunden sind. Das Hüllrohr 200 ist innerhalb des Überfangrohrs 300 angeordnet, so dass die Hüllrohraußenfläche 210 manschettenartig von einer Überfangrohrinnenfläche 310 umgeben ist. Die Hüllrohraußenfläche 210 weist einen geringeren Durchmesser als die Überfangrohrinnenfläche 310 auf, so dass zwischen Hüllrohr 200 und Überfangrohr 300 ein ringförmiger Spalt 450 ausgeformt ist. Der Spalt 450 erlaubt ein kontaktloses, und damit ein unbeschädigtes, Einbringen des Hüllrohrs 200 in das Überfangrohr 300. Um das Hüllrohr 200 innerhalb des Überfangrohrs 300 anzuordnen, ist ein zweites Hüllrohrende 235 als Haltekugel 240 ausgeformt. In der gezeigten Ausgestaltungsform sind das Hüllrohr 200 und die Haltekugel 240 einteilig und materialidentisch ausgeformt. In weiteren, nicht gezeigten, Ausgestaltungsformen sind das Hüllrohr 200 und die Haltekugel 240 aus unterschiedlichen Materialien ausgeformt, beispielsweise ist die Haltekugel 240 aus einem Glas, insbesondere einem Quarzglas, gefertigt. Die Haltekugel 240 weist einen Haltekugelaußendurchmesser 245 auf, welcher größer ist als ein Innendurchmesser des Überfangrohrs 300. Bei der gezeigten, und für das Verfahren vorteilhaften, senkrecht zur Erdoberfläche gestalteten Anordnung der Bauteile, wobei die Haltekugel von der Erdoberfläche aus oben am Hüllrohr 200 angebracht oder ausgeformt ist, erlaubt dies ein Einhängen des Hüllrohrs 200 in das Überfangrohr 300. Die Haltekugel 240 ist sowohl an einem dem Hüllrohr 200 zugewandten ersten Haltekugelende 241, als auch einem dem ersten Haltekugelende 241 axial entgegengesetztem zweiten Haltekugelende 242 fluidleitend ausgestattet, so dass das Innere des Hüllrohrs 200 über die Haltekugel 240 mit der Umgebung des Hüllrohrs 200 fluidleitend verbunden ist. Um einen Gasaustausch um die Haltekugel 240 herum, also zwischen der Kontaktstelle von Haltekugel 240 und Überfangrohr 300, zu ermöglichen, kann die Haltekugel 240, insbesondere eine Haltekugelaußenfläche, Rillen, Nuten oder andersartige axial verlaufende Vertiefungen aufweisen (nicht gezeigt). Ein der Erdoberfläche zugewandtes erstes Hüllrohrende 230 ist als Spitze ausgeformt, welche das erste Hüllrohrende 230 fluidleitend verschließt. Ein Gasaustausch zwischen dem Inneren des Hüllrohrs 200 und der Umgebung des Hüllrohrs 200 kann in der gezeigten Ausgestaltungsform nur über die Haltekugel 240 am zweiten Hüllrohrende 230 stattfinden.

Ein dem ersten Hüllrohrende 230 zugewandtes erstes Überfangrohrende 330 ist mit einer haubenartig ausgestalteten ersten Haltepfeife 500, insbesondere mit einem ersten Haltepfeifenrand 510 der ersten Haltepfeife 500, axial verbunden. Die erste Haltepfeife 500 ist an einer dem ersten Hüllrohrende 230 zugewandten Seite als eine Lochscheibe 530 ausgeformt, in welche das als Spitze ausgeformte erste Hüllrohrende 230 aufgenommen und damit gegen seitliche Bewegung fixiert ist. Dies verhindert die teilweise oder vollständige Zerstörung des Überfangrohrs 300 und/oder des Hüllrohrs 200 durch unkontrollierte Relativbewegungen dieser beiden Bauteile des ersten Zwischenproduktes 100' zueinander. Zudem wird die axiale Ausrichtung des Hüllrohrs 200 innerhalb des Überfangrohrs 300 durch die Lochscheibe 530 erleichtert. In der gezeigten Ausgestaltungsform sind die erste Haltepfeife 500 und die Lochscheibe 530 einteilig ausgeformt. In weiteren Ausgestaltungsformen ist die Lochscheibe 530 als separates Bauteil, bevorzugt aus einem Quarzglas, ausgeformt.

Die erste Haltepfeife 500 weist einen ersten Haltepfeifeninnenraum 520 auf, welcher mit dem Spalt 450 zwischen Überfangrohrinnenfläche 310 und Hüllrohraußenfläche 210 über axial verlaufende Durchführungen 535 in der Lochscheibe 530 fluidleitend verbunden ist. An einem dem Überfangrohr 300 entgegengesetztem Ende weist die erste Haltepfeife 500 einen ersten Gasanschluss 540 auf. Der erste Gasanschluss 540 kann reversibel fluidleitend geöffnet und fluidleitend verschlossen werden. Der erste Gasanschluss 540 kann wahlweise mit der Umgebung des ersten Zwischenproduktes 100', einem Reservoir für Gase, wie beispielsweise Stickstoff oder Argon, und einer Unterdruckquelle zum Anlegen eines Unterdrucks verbunden werden oder der erste Gasanschluss 540 kann gasundurchlässig verschlossen werden.

Ein dem zweiten Hüllrohrende 235 zugewandtes zweites Überfangrohrende 340 ist mit einer haubenartig ausgestalten zweiten Haltepfeife 550 axial verbunden.

Die zweite Haltepfeife 550 weist einen zweiten Haltepfeifeninnenraum 570 auf, welcher über die Haltekugel 240 mit dem Inneren des Hüllrohrs 200 fluidleitend verbunden ist. An einem dem Überfangrohr 300 entgegengesetztem Ende weist die zweite Haltekugel 550 einen zweiten Gasanschluss 580 auf. Der zweite Gasanschluss 580 kann reversibel fluidleitend geöffnet und fluidleitend verschlossen werden. Der zweite Gasanschluss 580 kann wahlweise mit der Umgebung des ersten Zwischenproduktes 100', einem Reservoir für Gase, wie beispielsweise Stickstoff oder Argon, und einer Unterdruckquelle zum Anlegen eines Unterdrucks verbunden werden oder der zweite Gasanschluss 580 kann gasundurchlässig verschlossen werden.

In dem gezeigten Stadium des Verfahrens zur Herstellung einer Vorform einer antiresonanten Hohlkernfaser sind der erste Gasanschluss 540 und der zweite Gasanschluss 580 fluidleitend geöffnet, wobei durch den ersten Gasanschluss 540 ein Gas, beispielsweise Stickstoff oder Argon, eingeleitet wird. Das Gas durchströmt die erste Haltepfeife 500 und das erste Zwischenprodukt 100' und wird durch den zweiten Gasanschluss 580 wieder ausgeleitet, wodurch die zuvor im ersten Zwischenprodukt 100' enthaltene Umgebungsluft möglichst vollständig entfernt und ein im Zuge des Verfahrens folgendes Aufkollabieren des Überfangrohrs 300 auf das Hüllrohr 200 vorbereitet wird.

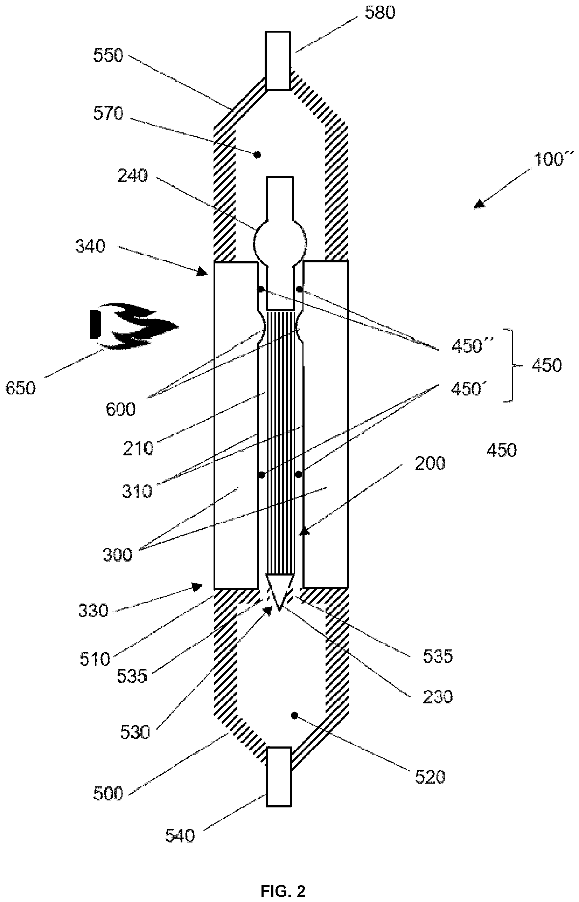

**Figur 2** zeigt einen Längsschnitt durch ein aus dem ersten Zwischenprodukt 100' aus Figur 1 hergestelltes zweites Zwischenprodukt 100" des Verfahrens zur Herstellung einer Vorform einer antiresonanten Hohlkernfaser. Das zweite Zwischenprodukte 100" unterscheidet sich vom ersten Zwischenprodukt 100' aus Figur 1 dadurch, dass das Überfangrohr 300, insbesondere die Hüllrohraußenfläche 210, im Bereich des zweiten Hüllrohrendes 235 mit dem Überfangrohr 300, insbesondere der Überfangrohrinnenfläche 310, über eine ringförmige Verbindungsstelle 600 gasundurchlässig verbunden ist.

Um das Überfangrohr 300 mit dem Hüllrohr 200 zu verbinden, wurde der zweite Gasanschluss 580 fluidleitend verschlossen und der erste Gasanschluss 540 fluidleitend mit einer Unterdruckquelle, beispielsweise mit einer Vakuumpumpe, verbunden. Über den derart im Spalt 450 erzeugten Unterdruck im Zusammenspiel mit einer lokal begrenzten, ringförmig um das Überfangrohr 300 angelegten Wärmezufuhr 650 im Bereich der herzustellenden Verbindungsstelle 600 findet ein stoffschlüssiges Verbinden von Überfangrohrinnenfläche 310 und Hüllrohraußenfläche 210 statt. Beispielsweise werden mittels eines Elektroofens (nicht gezeigt) mit einer Betriebstemperatur im Bereich von 1950 °C bis 2150 °C die Materialien im Bereich der Verbindungsstelle 600 erwärmt, um das stoffschlüssige Verbinden von Überfangrohrinnenfläche 310 und Hüllrohraußenfläche 210 zu ermöglichen.

Die Verbindungsstelle 600 unterteilt den Spalt 450 zwischen Überfangrohrinnfläche 310 und Hüllrohraußenfläche 210 in einen der ersten Haltepfeife 500 zugewandten, und mit dieser fluidleitend verbundenen, ersten Spaltabschnitt 450' und einen der zweiten Haltepfeife zugewandten, und mit dieser fluidleitend verbundenen, zweiten Spaltabschnitt 450".

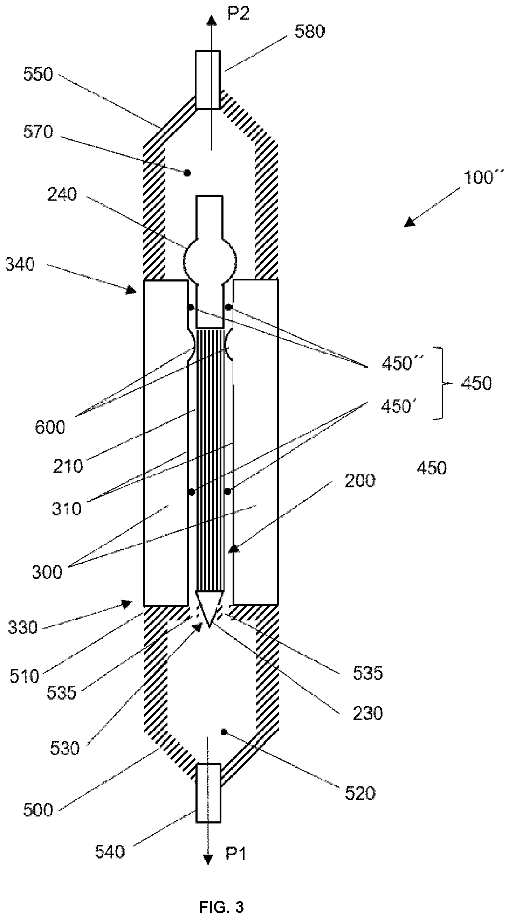

**Figur 3** zeigt das zweite Zwischenprodukt 100" aus Figur 2 in einem fortgeschrittenen Stadium des Verfahrens zur Herstellung einer Vorform einer antiresonanten Hohlkernfaser. Die Verbindungsstelle 600 hat das zweite Zwischenprodukt 100" in zwei voneinander getrennte Druckbereich unterteilt. Ein erster Druckbereich umfasst die erste Haltepfeife, insbesondere den ersten Haltepfeifeninnenraum 520 und den ersten Spaltabschnitt 450'. Ein zweiter Druckbereich umfasst die zweite Haltepfeife 550, insbesondere den zweiten Haltepfeifeninnenraum 570, die Haltekugel 240 und innerhalb des Hüllrohrs 200 samt der Antiresonanzelement-Vorformlinge 400. Der erste Gasanschluss 540 und der zweite Gasanschluss 580 sind fluidleitend geöffnet und jeweils mit einer separaten Unterdruckquelle, beispielsweise jeweils mit einer separaten Vakuumpumpe, verbunden. Dies ermöglicht ein Anlegen eines ersten Unterdrucks P1 im ersten Druckbereich und davon unabhängig ein Anlegen eines zweiten Unterdrucks P2 im zweiten Druckbereich und damit ein Aufkollabieren des Überfangrohrs 300 auf das Hüllrohr 200 bei gleichzeitig reproduzierbarem hohem Erhalt der Präzision des Hüllrohrs 200 und der Antiresonanzelement-Vorformlinge 400 im Zuge des weiteren Verfahrens.

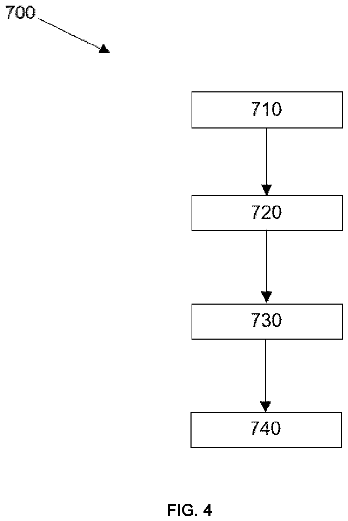

**Figur 4** zeigt eine Ausgestaltungsform eines Verfahrens 700 zur Herstellung einer Vorform einer antiresonanten Hohlkernfaser, zumindest aufweisend die Verfahrensschritte:
(a) Bereitstellen 710 eines Hüllrohrs 200 mit einer Hüllrohrinnenfläche und einer Hüllrohraußenfläche 210, wobei an der Hüllrohrinnenfläche mindestens ein Antiresonanzelement-Vorformling 400 angeordnet ist,
(b) Bereitstellen 720 eines Überfangrohrs 300 mit einer Überfangrohrinnenfläche 310, wobei das Überfangrohr 300 einen Innendurchmesser aufweist, welcher größer einem Außendurchmesser des Hüllrohrs 200 ist,
(c) Anordnen 730 des Hüllrohrs 200 innerhalb des Überfangrohrs 300, so dass die Überfangrohrinnenfläche 310 die Hüllrohraußenfläche 210 umgibt,
(d) Aufkollabieren 740 des Überfangrohrs 300 auf das Hüllrohr 200, so dass sich die Überfangrohrrohrinnenfläche 310 mit der Hüllrohraußenfläche 210 verbindet.

Dabei ist vorgesehen, dass während des Aufkollbabierens 740 in Verfahrensschritt (d) ein erster Unterdruck P1 zwischen Überfangrohrinnenfläche 310 und Hüllrohraußenfläche 210 und ein zweiter Unterdruck P2 innerhalb des Hüllrohrs 200 angelegt wird, um das Aufkollabieren bei gleichzeitig reproduzierbar hohem Erhalt der Präzision der Strukturelemente, insbesondere des Hüllrohrs 200 und des mindestens einen Antiresonanzelement-Vorformlings 400, zu ermöglichen.

Die für die Vorform, die antiresonante Hohlkernfaser oder die Zwischenprodukte des Verfahrens offenbarten Merkmale sind auch für das Verfahren offenbart und umgekehrt.

### Bezugszeichen

- 100': erstes Zwischenprodukt eines Verfahrens zur Herstellung einer Vorform einer antiresonanten Hohlkernfaser
- 100": zweites Zwischenprodukt eines Verfahrens zur Herstellung einer Vorform einer antiresonanten Hohlkernfaser

- 200: Hüllrohr
- 210: Hüllrohraußenfläche
- 230: erstes Hüllrohrende
- 235: zweites Hüllrohrende
- 240: Haltekugel
- 241: erstes Haltekugelende
- 242: zweites Haltekugelende
- 245: Haltekugelaußendurchmesser

- 300: Überfangrohr
- 310: Überfangrohrinnenfläche
- 330: erstes Überfangrohrende
- 340: zweites Überfangrohrende

- 400: Antiresonanzelement-Vorformlinge
- 450: Spalt
- 450': erster Spaltabschnitt
- 450": zweiter Spaltabschnitt

- 500: erste Haltepfeife
- 510: erster Haltepfeifenrand
- 520: erster Haltepfeifeninnenraum
- 530: Lochscheibe
- 535: Durchführungen in der Lochscheibe
- 540: erste Gasanschluss
- 550: zweite Haltepfeife
- 570: zweiter Haltepfeifeninnenraum
- 580: zweiter Gasanschluss
- 600: Verbindungsstelle
- 650: Wärmezufuhr

- 700: Verfahrens zur Herstellung einer Vorform einer antiresonanten Hohlkernfaser
- 710: Bereitstellen eines Hüllrohrs
- 720: Bereitstellen eines Überfangrohrs
- 730: Anordnen des Hüllrohrs innerhalb des Überfangrohrs
- 740: Aufkollabieren des Überfangrohrs auf das Hüllrohr

- P1: erster Unterdruck
- P2: zweiter Unterdruck

## Patentansprüche

1. Verfahren (700) zur Herstellung einer Vorform einer antiresonanten Hohlkernfaser, die einen sich entlang einer Faser-Längsachse erstreckenden Hohlkern und einen den Hohlkern umgebenden Mantelbereich aufweist, der mindestens ein Antiresonanzelement umfasst, zumindest aufweisend die Verfahrensschritte:
(a) Bereitstellen (710) eines Hüllrohrs (200) mit einer Hüllrohrinnenfläche und einer Hüllrohraußenfläche (210), wobei an der Hüllrohrinnenfläche mindestens ein Antiresonanzelement-Vorformling (400) angeordnet ist,
(b) Bereitstellen (720) eines Überfangrohrs (300) mit einer Überfangrohrinnenfläche (310), wobei das Überfangrohr (300) einen Innendurchmesser aufweist, welcher größer einem Außendurchmesser des Hüllrohrs (200) ist,
(c) Anordnen (730) des Hüllrohrs (200) innerhalb des Überfangrohrs (300), so dass die Überfangrohrinnenfläche (310) die Hüllrohraußenfläche (210) umgibt,
(d) Aufkollabieren (740) des Überfangrohrs (300) auf das Hüllrohr (200), so dass sich die Überfangrohrrohrinnenfläche (310) mit der Hüllrohraußenfläche (210) verbindet,
**dadurch gekennzeichnet, dass**
während des Aufkollabierens (740) in Verfahrensschritt (d) ein erster Unterdruck P1 zwischen Überfangrohrinnenfläche (310) und Hüllrohraußenfläche (210) und ein zweiter Unterdruck P2 innerhalb des Hüllrohrs (200) angelegt wird.

2. Verfahren (700) nach Anspruch 1, **dadurch gekennzeichnet, dass** der erste Unterdruck P1 in einem Bereich von -100 mbar bis -10 mbar und der zweite Unterdruck P2 in einem Bereich von -50 mbar bis -1 mbar gegenüber einem Umgebungsdruck liegt.

3. Verfahren (700) nach Anspruch 1 oder 2, **dadurch gekennzeichnet, dass** der erste Unterdruck P1 einen größeren Betrag als der zweite Unterdruck P2 aufweist.

4. Verfahren (700) nach einem der vorhergehenden Ansprüche, **dadurch gekennzeichnet, dass** während des Aufkollabierens (740) in Verfahrensschritt (d) innerhalb des mindestens einen Antiresonanzelement-Vorformlings (400) ein dritter Unterdruck P3 angelegt wird.

5. Verfahren (700) nach Anspruch 4, **dadurch gekennzeichnet, dass** der dritte Unterdruck P3 den gleichen Betrag wie der zweite Unterdruck P2 aufweist.

6. Verfahren (700) nach Anspruch 4, **dadurch gekennzeichnet, dass** der dritte Unterdruck P3 einen anderen Betrag als der erste Unterdruck P1 und der zweite Unterdruck P2 aufweist, insbesondere dass der dritte Unterdruck P3 einen kleineren Betrag als der zweite Unterdruck P2 aufweist.

7. Verfahren (700) nach einem der vorhergehenden Ansprüche, **dadurch gekennzeichnet, dass** vor Verfahrensschritt (d) das Hüllrohr (200) an einem ersten Hüllrohrende (230) gasundurchlässig verschlossen und die Überfangrohrinnenfläche (310) an einem zweiten Hüllrohrende (235) bereichsweise mit der Hüllrohraußenfläche (210) gasundurchlässig verbunden wird.

8. Verfahren (700) nach Anspruch 7, **dadurch gekennzeichnet, dass** das Hüllrohr (200) am zweiten Hüllrohrende (235) eine Haltekugel (240) aufweist, um in Verfahrensschritt (c) das Hüllrohr (200) innerhalb des Überfangrohrs (300) anzuordnen.

9. Verfahren (700) nach einem der Ansprüche 7 oder 8, **dadurch gekennzeichnet, dass** das Hüllrohr (200) am ersten Hüllrohrende (230) unter Bildung einer Spitze gasundurchlässig verschlossen wird.

10. Verfahren (700) nach einem der Ansprüche 7 bis 9, **dadurch gekennzeichnet, dass** der erste Unterdruck P1 im Bereich des ersten Hüllrohrendes (230) und der zweite Unterdruck P2 im Bereich des zweiten Hüllrohrendes (235) angelegt wird.

11. Verfahren (700) nach Anspruch 10, **dadurch gekennzeichnet, dass** der erste Unterdruck P1 mittels einer ersten Haltepfeife (500), welche an einem dem ersten Hüllrohrende (230) zugwandten ersten Überfangrohrende (330) angebracht ist, und der zweite Unterdruck P2 mittels einer zweiten Haltepfeife (550), welche an einem dem zweiten Hüllrohrende (235) zugwandten zweiten Überfangrohrende (340) angebracht ist, angelegt wird.

12. Verfahren (700) nach einem der Ansprüche 9 bis 11, **dadurch gekennzeichnet, dass** die Spitze vor Verfahrensschritt (d) in eine Lochscheibe (530) eingesetzt wird.

13. Verfahren (700) nach einem der vorhergehenden Ansprüche, **dadurch gekennzeichnet, dass** zuerst der erste Unterdruck P1 und dann der zweite Unterdruck P2 angelegt wird.

14. Verfahren (700) nach einem der vorhergehenden Ansprüche, **dadurch gekennzeichnet, dass** die Vorform während dem Aufkollabieren (740) in Verfahrensschritt (d) elongiert wird.

## Claims

1. A method (700) for producing a preform of an anti-resonant hollow-core fiber, which has a hollow core that extends along a longitudinal axis of the fiber and a sheath region that surrounds the hollow core and comprises at least one anti-resonance element, at least comprising the method steps of:
(a) providing (710) a cladding tube (200) having a cladding tube inner surface and a cladding tube outer surface (210), at least one anti-resonance element blank (400) being arranged on the cladding tube inner surface,
(b) providing (720) an overlay tube (300) having an overlay tube inner surface (310), the overlay tube (300) having an inner diameter which is larger than an outer diameter of the cladding tube (200),
(c) arranging (730) the cladding tube (200) inside the overlay tube (300) such that the overlay tube inner surface (310) surrounds the cladding tube outer surface (210),
(d) collapsing (740) the overlay tube (300) onto the cladding tube (200) such that the overlay tube inner surface (310) connects to the cladding tube outer surface (210),
**characterized in that**
during the collapse (740) in method step (d), a first negative pressure P1 is applied between the overlay tube inner surface (310) and the cladding tube outer surface (210) and a second negative pressure P2 is applied inside the cladding tube (200).

2. The method (700) according to claim 1, **characterized in that** the first negative pressure P1 is in a range of -100 mbar to -10 mbar and the second negative pressure P2 is in a range of -50 mbar to -1 mbar relative to an ambient pressure.

3. The method (700) according to either claim 1 or claim 2, **characterized in that** the first negative pressure P1 is greater than the second negative pressure P2.

4. The method (700) according to any of the preceding claims, **characterized in that** a third negative pressure P3 is applied inside the at least one anti-resonance element blank (400) during the collapse (740) in method step (d).

5. The method (700) according to claim 4, **characterized in that** the third negative pressure P3 is the same as the second negative pressure P2.

6. The method (700) according to claim 4, **characterized in that** the third negative pressure P3 is different from the first negative pressure P1 and the second negative pressure P2, in particular **in that** the third negative pressure P3 is smaller than the second negative pressure P2.

7. The method (700) according to any of the preceding claims, **characterized in that** prior to method step (d), the cladding tube (200) is closed in a gas-impermeable manner at a first cladding tube end (230), and the overlay tube inner surface (310) is connected in regions in a gas-impermeable manner to the cladding tube outer surface (210) at a second cladding tube end (235).

8. The method (700) according to claim 7, **characterized in that** the cladding tube (200) has a retaining ball (240) at the second cladding tube end (235) in order to arrange the cladding tube (200) inside the overlay tube (300) in method step (c).

9. The method (700) according to any of claims 7 or 8, **characterized in that** the cladding tube (200) is closed in a gas-impermeable manner at the first cladding tube end (230) to form a tip.

10. The method (700) according to any of claims 7 to 9, **characterized in that** the first negative pressure P1 is applied in the region of the first cladding tube end (230) and the second negative pressure P2 is applied in the region of the second cladding tube end (235).

11. The method (700) according to claim 10, **characterized in that** the first negative pressure P1 is applied by means of a first retaining pipe (500), which is attached to a first overlay tube end (330) that faces the first cladding tube end (230), and the second negative pressure P2 is applied by means of a second retaining pipe (550), which is attached to a second overlay tube end (340) that faces the second cladding tube end (235).

12. The method (700) according to any of claims 9 to 11, **characterized in that** the tip is inserted into a perforated disk (530) prior to method step (d).

13. The method (700) according to any of the preceding claims, **characterized in that** the first negative pressure P1 is applied first, and then the second negative pressure P2 is applied.

14. The method (700) according to any of the preceding claims, **characterized in that** the preform is elongated during the collapse (740) in method step (d).

## Revendications

1. Procédé (700) de fabrication d'une préforme d'une fibre à coeur creux antirésonante qui présente un coeur creux s'étendant le long d'un axe longitudinal de fibre et une zone enveloppante entourant le coeur creux, laquelle zone enveloppante comprend au moins un élément antirésonant, présentant au moins les étapes de procédé de :
(a) fourniture (710) d'un tube de gainage (200) comportant une surface interne de tube de gainage et une surface externe de tube de gainage (210), au moins une ébauche d'élément antirésonant (400) étant agencée sur la surface interne de tube de gainage,
(b) fourniture (720) d'un tube de recouvrement (300) comportant une surface interne de tube de recouvrement (310), le tube de recouvrement (300) présentant un diamètre interne qui est supérieur à un diamètre externe du tube de gainage (200),
(c) agencement (730) du tube de gainage (200) à l'intérieur du tube de recouvrement (300), de sorte que la surface interne de tube de recouvrement (310) entoure la surface externe de tube de gainage (210),
(d) affaissement (740) du tube de recouvrement (300) sur le tube de gainage (200), de manière à relier la surface interne de tube de recouvrement (310) à la surface externe de tube de gainage (210),
**caractérisé en ce que,**
pendant l'affaissement (740) à l'étape de procédé (d), une première pression négative P1 est appliquée entre la surface interne de tube de recouvrement (310) et la surface externe de tube de gainage (210) et une deuxième pression négative P2 est appliquée à l'intérieur du tube de gainage (200).

2. Procédé (700) selon la revendication 1, **caractérisé en ce que** la première pression négative P1 se situe dans une plage de -100 à -10 mbar et la deuxième pression négative P2 se situe dans une plage de -50 à -1 mbar par rapport à une pression ambiante.

3. Procédé (700) selon la revendication 1 ou 2, **caractérisé en ce que** la première pression négative P1 présente une valeur supérieure à celle de la deuxième pression négative P2.

4. Procédé (700) selon l'une quelconque des revendications précédentes, **caractérisé en ce que,** pendant l'affaissement (740) à l'étape de procédé (d), une troisième pression négative P3 est appliquée à l'intérieur de l'au moins une ébauche d'élément antirésonant (400).

5. Procédé (700) selon la revendication 4, **caractérisé en ce que** la troisième pression négative P3 présente une valeur identique à celle de la deuxième pression négative P2.

6. Procédé (700) selon la revendication 4, **caractérisé en ce que** la troisième pression négative P3 présente une valeur différente de celles de la première pression négative P1 et de la deuxième pression négative P2, en particulier **en ce que** la troisième pression négative P3 présente une valeur inférieure à celle de la deuxième pression négative P2.

7. Procédé (700) selon l'une quelconque des revendications précédentes, **caractérisé en ce que,** avant l'étape de procédé (d), le tube de gainage (200) est fermé au niveau d'une première extrémité de tube de gainage (230) de manière imperméable aux gaz, et la surface interne de tube de recouvrement (310) est reliée de manière imperméable aux gaz, au niveau d'une seconde extrémité de tube de gainage (235), par endroits à la surface externe de tube de gainage (210).

8. Procédé (700) selon la revendication 7, **caractérisé en ce que** le tube de gainage (200) présente une bille de retenue (240) sur la seconde extrémité de tube de gainage (235), ce qui permet l'agencement du tube de gainage (200) à l'intérieur du tube de recouvrement (300) pendant l'étape de procédé (c).

9. Procédé (700) selon l'une des revendications 7 ou 8, **caractérisé en ce que** le tube de gainage (200) est fermé de manière imperméable aux gaz au niveau de la première extrémité de tube de gainage (230) de manière à former une pointe.

10. Procédé (700) selon l'une des revendications 7 à 9, **caractérisé en ce que** la première pression négative P1 est appliquée dans la zone de la première extrémité de tube de gainage (230) et la deuxième pression négative P2 est appliquée dans la zone de la seconde extrémité de tube de gainage (235).

11. Procédé (700) selon la revendication 10, **caractérisé en ce que** la première pression négative P1 est appliquée au moyen d'un premier sifflet de retenue (500) qui est monté sur une première extrémité de tube de recouvrement (330) tournée vers la première extrémité de tube de gainage (230), et la deuxième pression négative P2 est appliquée au moyen d'un second sifflet de retenue (550) qui est monté sur une seconde extrémité de tube de recouvrement (340) tournée vers la seconde extrémité de tube de gainage (235).

12. Procédé (700) selon l'une des revendications 9 à 11, **caractérisé en ce que** la pointe est insérée dans un disque perforé (530) avant l'étape de procédé (d).

13. Procédé (700) selon l'une quelconque des revendications précédentes, **caractérisé en ce que** la première pression négative P1 est d'abord appliquée et ensuite la deuxième pression négative P2.

14. Procédé (700) selon l'une quelconque des revendications précédentes, **caractérisé en ce que** la préforme est allongée pendant l'affaissement (740) à l'étape de procédé (d).
